# EUROPÄISCHE PATENTSCHRIFT

(11) **EP 0 258 876 B1**
(45) Veröffentlichungstag und Bekanntmachung des Hinweises auf die Patenterteilung: **18.01.1995**
(21) Anmeldenummer: 87112752.8
(22) Anmeldetag: 01.09.1987
(51) Int. Cl.: G09B 29/10, G08G 1/123

(54) **Fahrgastinformationssystem für ein Linienverkehrsmittel**
Passenger information system for a public transport means
Système d'information pour passagers dans un moyen de transport public

(30) Priorität: 03.09.1986 DE 3629977
(43) Veröffentlichungstag der Anmeldung: 09.03.1988
(73) Patentinhaber: Carl Brose GmbH, D-42109 Wuppertal (DE)
(72) Erfinder: Mucke, Reiner, Dipl.-Ing., D-5600 Wuppertal 2 (DE)
(74) Vertreter: Grünecker, Kinkeldey, Stockmair & Schwanhäusser Anwaltssozietät

(56) Entgegenhaltungen:
- DE-A- 3 209 753
- DE-A- 3 248 911
- DE-A- 3 342 715
- DE-U- 8 207 556
- FR-A- 2 556 864
- US-A- 4 165 605

## Beschreibung

Die vorliegende Erfindung betrifft ein Fahrgastinformationssystem für ein Linienverkehrsmittel nach dem Oberbegriff des Patentanspruchs 1.

Die DE-A- 33 42 715 offenbart einen Rollbandapparat mit bandförmigem Informationsträger. Auf dem bandförmigen Informationsträger sind Haltestellen eines Linienverkehrsmittels in Form einer Punktfolge angegeben, die durch die Lochung des Informationsträgers ausgeführt ist. Hinter jedem Loch liegt eine Flächenleuchtdiode. Das Leuchten einer Flächenleuchtdiode zeigt dem Fahrgast an, daß die an der leuchtenden Flächenleuchtdiode angeschriebene Haltestelle als nächste Haltestelle angefahren wird. Zur Darstellung einer Mehrzahl von Haltestellenverläufen muß der als Polyesterband ausgeführte Informationsträger eine erhebliche Länge haben, wodurch sich bei gegebener Drehzahl der Wickelwalzen des Rollbandapparates die Bandgeschwindigkeit entsprechend der Wickelwalzendicke ändert. Aufgrund dessen bereitet das Positionieren des Rollbandes in der Weise, daß die dem Punkt einer Haltestelle entsprechende Lochung auf der Flächenleuchtdiode zu liegen kommt, erhebliche Schwierigkeiten. Entprechend schwierig ist auch eine ausreichend genaue Lochung des Polyesterbandes in der Weise, daß die Vielzahl der Löcher genau über den einzelnen Flächenleuchtdioden zu liegen kommen. Da die Flächenleuchtdioden räumlich hinter dem Polyesterband angeordnet sind, ist dieses Fahrgastinformationssystem nur dann leicht ablesebar, wenn der Fahrgast senkrecht vor dem Informationsträger steht, während ein Ablesen des Fahrgastinformationssystems aus einem flachen Betrachtungswinkel schwierig oder gar ausgeschlossen ist.

Die DE-A- 25 52 339 offenbart ein weiteres Fahrgastinformationssystem, was sich von dem Informationssystem nach der DE-A- 33 42 715 nur dadurch unterscheidet, daß der Informationsträger durch Wechselrähmchen für die einzelnen Stationsnamen unten nicht durch ein Rollband gebildet wird. Eine flexible Umstellung dieses Fahrgastinformationssystemes auf verschiedene Streckenverläufe ist wegen das umständlichen Austauschens der Wechselrähmchen nicht möglich. Auch DE-A- 32 09 753 offenbart ein ähnliches System mit einzelnen Leuchtdioden, die die Haltestellen auf einem Informationsträger anzeigen. Dieses System zeigt den gleichen Mangel an Flexibilität.

Aus der GB-A- 21 63 281 ist ein Fahrgastinformationssystem für Untergrundbahnen bekannt. Bei diesem bekannten Fahrgastinformationssystem wird ein Farbcode zur Bezeichnung der einzelnen Haltestellen verwendet. In einer Ausführungsform dieses Fahrgastinformationssystemes wird eine Farbcodetafel, deren Code der nächsten Haltestelle entspricht, kurz vor Erreichen der nächsten Haltestelle beleuchtet. Eine Anpassung dieses bekannten Fahrgastinformationssystemes an verschiedene Haltestellenverläufe kann durch nur vollständigen Umbau der Farbcodeanzeigevorrichtung vorgenommen werden.

Die FR-A- 20 63 676 zeigt ein Fahrgastinformationssystem mit einem feststehenden Informationsträger, auf dem Haltestellen des Linienverkehrsmittels in Form einer aufgedruckten Punktfolge angegeben sind. Hinter dem Informationsträger ist ein Rollband, das mit einem farbigen Pfeil bedruckt ist, angeordnet. Das Rollband mit dem Pfeil wird bei jedem Erreichen einer Haltestelle zu dem Punkt, der die nächste Haltestelle angibt, weiterbewegt. Die Ablesbarkeit des bekannten Fahrgastinformationssystems mit den beiden hintereinander angeordneten Bändern für den Informationsträger sowie für den Pfeil vermag nur dann zu befriedigen, wenn dieses Fahrgastinformationssystem in einer dunklen Umgebung verwendet wird, so daß der optische Effekt, der durch die rückseitige Beleuchtung der beiden durchscheinenden Schichten erreicht wird, ausreichend stark ist. Ein Umstellen dieses Fahrgastinformationssystemes auf einen anderen Haltestellenverlauf kann entweder durch umständliches Auswechseln des Informationsträgers vorgenommen werden, oder könnte mit einem Rollbandgerät nach der oben genannten DE-A- 33 42 715 bewirkt werden, wobei im letzteren Fall dieselben Probleme in der Positionierung des Informationsträger-Rollbandes auftreten würden. Darüber hinaus ist die erforderliche mechanische Antriebseinheit für das Rollband unerwünscht groß sowie auch kostenintensiv.

Die Firmenschrift "AEG Fahrgastinformationssystem FIS 2000" offenbart insbesondere verschiedene alphanumerische Anzeigesysteme, bei denen die Anzeigeelemente als Flächenraster angeordnet sind. Innerhalb des Flächenrasters können sowohl Liniennummern wie auch Namen der Fahrziele angegeben werden. Derartige Anzeigesysteme sind zwar gut ablesbar und flexibel, jedoch sowohl wegen der alphanumerischen Anzeigevorrichtungen selbst wie auch wegen der hierfür benötigten Steuergeräte oder Steuercomputer äußerst aufwendig.

Gegenüber diesem Stand der Technik liegt der vorliegenden Erfindung die Aufgabe zugrunde, ein Fahrgastinformationssystem der eingangs genannten Art so weiterzubilden, daß trotz einfacher Ausgestaltung des Informationsträgers eine genaue und leichte Ablesbarkeit der nächsten Haltestelle ermöglicht wird.

Diese Aufgabe wird bei einem Farhgastinformationssystem nach dem Oberbegriff des Anspruchs 1 durch die im kennzeichnenden Teil des Anspruchs 1 angegebenen Merkmale gelöst.

Durch die Trennung der Funktion des Informationsträgers zur Darstellung des Haltestellenverlaufes und der Anzeige der erreichten Haltestelle in Form einer Zahl, die der betreffenden Haltestelle auf dem Informationsträger zugeordnet ist, kann das Fahrgastinformationssystem durch eine einfache Zahlenanzeigevorrichtung gebildet werden. Aufgrund dessen kann der Informationsträger als Rollbandapparat ausgeführt sein, da es bei der erfindungsgemäßen Ausgestaltung des Fahrgastinformationssystems nicht auf eine genaue räumliche Zuordnung des Rollbandes zu einer Anzeige ankommt. Auch andere Formen des Informationsträgers können angewendet werden.

Der besondere Vorteil des Informationssystems, nach der Lehre der Erfindung, ist darin zu sehen, daß durch die Trennung von Informationsträger und Standortangabe eine erhebliche Verbilligung und Vereinfachung eintritt und zugleich eine größere Breite der Ausführungsmöglichkeiten gewonnen wird.

Wenn als Informationsträger der an sich bekannte Rollbandapparat verwendet wird, so wird der Antrieb des Bandes mit den Mitteln zum Anhalten des Bandes vereinfacht, und die Lochung oder klarsichtige Ausbildung entlang der Perlenschnur entfällt. Eventuell kann auch ein anderes Trägermaterial verwendet werden.

Auch können als Informationsträger weiterhin die bekannten Stecktafeln verwendet werden, wobei bei einer Umrüstung die einzelnen Linien lediglich um die Ziffernfolge ergänzt werden müssen.

Es ist auch möglich, als Informationsträger eine Vielzahl kleiner Klebefolien zu verwenden, die im Fahrzeuginneren, zum Beispiel an der Rückseite der Rückenlehne des vorhergehenden Sitzes oder am Fenster angeklebt werden können. Dies ist insbesondere in Fahrzeugen brauchbar, die stets auf einer Linie fahren.

Endlich kann der Informationsträger in den Fahrplänen der Verkehrsbetriebe mit abgedruckt sein.

Die Verwendung einer Zahlenanzeigevorrichtung hat den Vorteil, daß diese zum Beispiel hinsichtlich der Größe nach der Raumaufteilung und den Sichtverhältnissen im Fahrzeug ausgebildet werden kann, ohne Rücksicht darauf, ob sie aus einer Sieben-Segment-oder einer Matrix-Anzeige besteht. Ein weiterer Vorteil besteht darin, daß sie während der ganzen Fahrt von einer Haltestelle zur nächsten ansteht und gegenüber der meist zu einmaligen Ansage über Lautsprecher nicht durch Fahrgeräusche oder äußeren Lärmpegel zunichte gemacht werden kann.

Zusätzlich kann die Zahlenanzeigevorrichtung in ein oder mehreren weiteren Zeilen die Benennung von Anschlußlinien anzeigen. Ein zeitlicher getakteter Anzeigeablauf kann auf wenigen Anzeigevorrichtungen den Informationsinhalt erhöhen.

Wie auch immer das erfindungsgemäße Informationssystem ausgebildet wird, wenn zusätzlich noch die Namensschilder der auf den Haltestellen oder Stationen, die vom Fahrzeuginneren erkannbar sein sollen, mit der gleichen Zahlenfolge versehen werden, wird dies auch Fremden, die eine andere Schriftart gewohnt sind, wie zum Beispiel japanische, arabische, griechische oder russische Schrift, die Orientierung erleichtern.

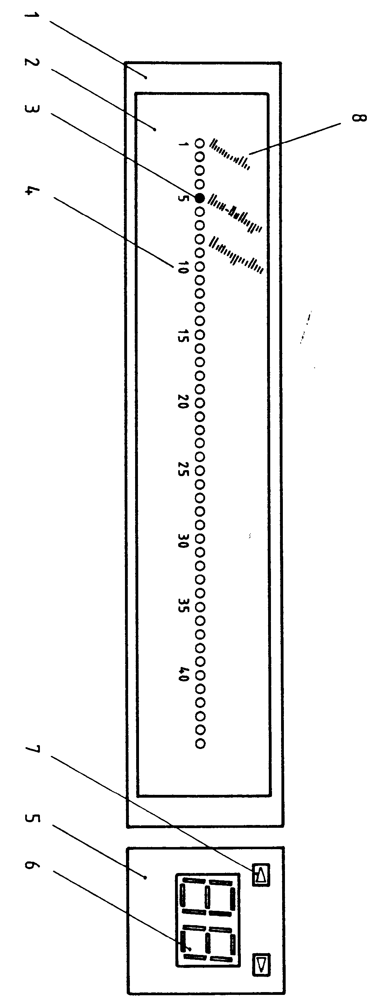

Die Figur zeigt in zum Teil schematischer Darstellung ein Ausführungsbeispiel eines Informationssystems nach der Lehre der Erfindung.

Der Informationsträger 1 besteht aus einem Rollband oder einer Stecktafel 2, auf der die einzelnen Haltestellen als Punktfolge dargestellt sind und über jedem Punkt 3 der Name 8 der Haltestelle und darunter die der Haltestelle zugeordnete Zahl 4 ausgedruckt ist. Daneben oder räumlich davon getrennt, befindet sich die Zahlenanzeigevorrichtung 5, auf der mit einer Sieben-Segment-Anzeige 6 oder Matrix-Anzeige, die der nächsten Haltestelle zugeordnete Zahl angezeigt wird und mit einem Pfeilsymbol 7 die Fahrtrichtung.

Bei großer räumlicher Trennung zwischen Informationsträger und Zahlenanzeigevorrichtung und damit erschwerter Zuordnung von Fahrtrichtung und Pfeilsymbol wird es zweckmäßig sein, die der Endhaltestelle zugeordnete Zahl anzugeben, die gerade angefahren wird.

## Patentansprüche

1. Fahrgastinformationssytem (1, 5) für ein Linienverkehrsmittel
mit wenigstens einem Informationsträger (1), auf dem Haltestellen des Linienverkehrsmittels in Form einer Punktfolge (3) angegeben sind,
wobei jedem Punkt der Punktfolge (3) ein Namen der Haltestelle oder die Bezeichnung einer von der Haltestelle aus erreichbaren Anschlußlinie zugeordnet ist,
dadurch **gekennzeichnet**,
daß die Punktfolge mit einer durchlaufenden Numerierung (4) versehen ist, und
daß eine Zahlenanzeigevorrichtung (5) vorgesehen ist, mit der als Angabe der nächsten Haltestelle eine dieser Haltestelle zugeordnete Zahl (4) anzeigbar ist.

2. Fahrgastinformationssystem nach Anspruch 1,
dadurch **gekennzeichnet**,
daß mit der Zahlenanzeigevorrichtung (5) ferner ein die Fahrtrichtung angebendes Pfeilsymbol (7) anzeigbar ist.

3. Fahrgastinformationssystem nach Anspruch 1 oder 2,
dadurch **gekennzeichnet**,
daß mit der Zahlenanzeigevorrichtung (5) die der angefahrenen Endhaltestelle zugeordnete Zahl anzeigbar ist.

4. Fahrgastinformationssystem nach einem der Ansprüche 1 bis 3,
dadurch **gekennzeichnet**,
daß der Informationsträger ein Rollbandapparat (1) ist, auf dessen Trägerband der dem Fahrtweg des Linienverkehrsmittels entsprechender Haltestellenverlauf angegeben ist.

5. Fahrgastinformationssystem nach einem der Ansprüche 1 bis 3,
dadurch **gekennzeichnet**,
daß der Informationsträger (2) als auswechselbare Stecktafel ausgebildet ist.

6. Fahrgastinformationssystem nach einem der Ansprüche 1 bis 3,
dadurch **gekennzeichnet**,
daß der Informationsträger (2) aus einer Klebefolie oder einer Mehrzahl von Klebefolien besteht, die im Fahrzeuginneren aufgeklebt sind.

7. Fahrgastinformationssystem nach einem der Ansprüche 1 bis 3,
dadurch **gekennzeichnet**,
daß der Informationsträger (2) durch den Fahrplan für das Linienverkehrsmittel gebildet ist.

8. Fahrgastinformationssystem nach einem der Ansprüche 1 bis 7,
dadurch **gekennzeichnet**,
daß die Zahlenanzeigevorrichtung (5) aus einer digitalen Sieben-Segment-Anzeige (6) oder einer Matrix-Anzeige besteht.

9. Fahrgastinformationssystem nach einem der Anssprüche 1 bis 8,
dadurch **gekennzeichnet**,
daß die Zahlenanzeigevorrichtung (5) ferner eine weitere Ziffernanzeige zum Darstellen von Anschlußlinien zugeordneten Zahlen aufweist.

## Claims

1. Passenger information system (1, 5) for a regular traffic means, having at least one information carrier (1) on which stopping places of the regular traffic means are indicated in the form of a series of points (3), each point of the series of points (3) having assigned to it a name of the stopping place or the identification of a connecting line which can be reached from the stopping place, characterized in that the series of points is provided with continuous numbering (4), and in that a numeric display device (5) is provided, with which, as an indication of the next stopping place, a number (4) assigned to that stopping place can be displayed.

2. Passenger information system according to Claim 1, characterized in that an arrow symbol (7) indicating the direction of travel can also be displayed by the numeric display device (5).

3. Passenger information system according to Claim 1 or 2, characterized in that the number assigned to the destination final stopping place can be displayed by the numeric display device (5).

4. Passenger information system according to one of Claims 1 to 3, characterized in that the information carrier is a rolling tape apparatus (1) on whose carrier tape the sequence of stopping places corresponding to the route of the regular traffic means is indicated.

5. Passenger information system according to one of Claims 1 to 3, characterized in that the information carrier (2) is designed as a replaceably plug-in board.

6. Passenger information system according to one of Claims 1 to 3, characterized in that the information carrier (2) comprises an adhesive tape or a plurality of adhesive tapes which are stuck on in the interior of the vehicle.

7. Passenger information system according to one of Claims 1 to 3, characterized in that the information carrier (2) is formed by the route map of the regular traffic means.

8. Passenger information system according to one of Claims 1 to 7, characterized in that the numeric display device (5) comprises a digital seven-segment display (6) or a matrix display.

9. Passenger information system according to one of Claims 1 to 8, characterized in that the numeric display device (5) also has a further alphanumeric display for showing numbers assigned to connecting lines.

## Revendications

1. Système (1, 5) d'information des passagers, pour un moyen de transport de ligne comportant au moins un support d'information (1) sur lequel les arrêts du moyen de transport de ligne sont indiqués sous forme d'une succession de points (3), un nom de l'arrêt ou la désignation d'une ligne de correspondance que l'on peut atteindre à partir de l'arrêt étant associés à chaque point de la succession de points (3),
caractérisé
par le fait que la succession de points est munie d'une numérotation continue (4) et
qu'il est prévu un dispositif (5) d'affichage de chiffres avec lequel, comme indication de l'arrêt suivant, on peut afficher un chiffre (4) correspondant à cet arrêt.

2. Système d'information pour passagers selon la revendication 1,
caractérisé
par le fait qu'avec le dispositif (5) d'affichage de chiffres on peut en outre afficher un symbole de flèche (7) indiquant le sens du trajet.

3. Système d'information pour passagers selon la revendication 1 ou 2,
caractérisé
par le fait qu'avec le dispositif (5) d'affichage de chiffres, on peut afficher le chiffre correspondant au terminus dont on s'approche.

4. Système d'information pour passagers selon l'une des revendications 1 à 3,
caractérisé
par le fait que le support d'information est un appareil (1) à bande déroulée sur la bande support duquel est indiqué le tracé des arrêts correspondant au parcours du moyen de transport de ligne.

5. Système d'information pour passagers selon l'une des revendications 1 à 3,
caractérisé
par le fait que le support d'information (2) est conçu en tant que panneau enfichable échangeable.

6. Système d'information pour passagers selon l'une des revendications 1 à 3,
caractérisé
par le fait que le support d'information (2) est constitué d'une feuille adhésive ou d'une pluralité de feuilles adhésives qui sont collées à l'intérieur du véhicule.

7. Système d'information pour passagers selon l'une des revendications 1 à 3,
caractérisé
par le fait que le support d'information (2) est formé par l'indicateur horaire du moyen de transport de ligne.

8. Système d'information pour passagers selon l'une des revendications 1 à 7,
caractérisé
par le fait que le dispositif (5) d'affichage de chiffres est constitué d'un visuel numérique (6) à sept segments ou d'un visuel matriciel.

9. Système d'information pour passagers selon l'une des revendications 1 à 8,
caractérisé
par le fait que le dispositif (5) d'affichage de chiffres présente en outre un autre affichage de chiffres pour représenter les chiffres correspondant aux lignes de correspondance.
